# EUROPÄISCHE PATENTSCHRIFT

(11) **EP 2 494 222 B1**
(45) Veröffentlichungstag und Bekanntmachung des Hinweises auf die Patenterteilung: **23.11.2016**
(21) Anmeldenummer: 10754911.5
(22) Anmeldetag: 10.09.2010
(51) Int. Cl.: F16C 33/78, B60K 7/00, F16H 57/02, H02K 5/173, H02K 7/116

(54) **ANTRIEBSEINHEIT FÜR KRAFTFAHRZEUGE MIT EINEM ELEKTROMOTOR**
DRIVE UNIT FOR MOTOR VEHICLES HAVING AN ELECTRICAL MOTOR
UNITÉ D'ENTRAÎNEMENT POUR VÉHICULES À MOTEUR COMPRENANT UN MOTEUR ÉLECTRIQUE

(30) Priorität: 28.10.2009 DE 102009051002
(43) Veröffentlichungstag der Anmeldung: 05.09.2012
(73) Patentinhaber: Schaeffler Technologies AG & Co. KG, 91074 Herzogenaurach (DE)
(72) Erfinder: RADINGER, Norbert, 90475 Nürnberg (DE); SMETANA, Tomas, 91074Herzogenaurach (DE)
(86) Internationale Anmeldenummer: PCT/EP2010/063322
(87) Internationale Veröffentlichungsnummer: WO 2011/051045

(56) Entgegenhaltungen:
- DE-A1- 10 132 319
- FR-A1- 2 780 213
- JP-A- 2004 215 393
- US-A- 3 770 074
- US-A1- 2005 254 740

## Beschreibung

### Gebiet der Erfindung

Die Erfindung betrifft eine Antriebseinheit für Kraftfahrzeuge mit wenigstens einem Elektromotor und mit wenigstens einer Getriebeanordnung, wobei der Elektromotor und die Getriebeanordnung mittels einer als Hohlwelle ausgebildeten Rotorwelle miteinander wirkverbunden sind und wobei die Rotorwelle mittels wenigstens eines ersten Wälzlagers, das in einer Drehdurchführung für die Rotorwelle in der Getriebeanordnung sitzt, drehbar gelagert ist.

### Hintergrund der Erfindung

DE 198 41 159 A1 beschreibt gattungsbildende Antriebseinheiten für Kraftfahrzeuge. Eine der Antriebseinheiten weist einen Elektromotor und eine Getriebeanordnung auf, die miteinander mittels wenigstens einer Welle wirkverbunden sind. Die Getriebeanordnung umfasst ein Differenzial und steht über einen Planetentrieb der Getriebeanordnung mit dem Elektromotor in der Wirkverbindung. Der Elektromotor ist koaxial zu dem Differenzial angeordnet. Das Differenzial ist vom Elektromotor angetrieben. Deshalb ist ein Getriebeelement drehfest mit der Rotorwelle des Elektromotors verbunden.

Die Rotorwelle ist mittels zwei Wälzlagern in Form von Kugellagern an einem Statorträger drehbar gelagert. Der Statorträger ist einteilig mit einem Teil eines Gehäuses der Antriebseinheit ausgebildet. Die Rotorwelle ist differenzialseitig mit einer Verzahnung versehen, die das Sonnenrad eines Planetentriebs ist. Der Planetenträger für die Planetenräder, die mit der Sonne des Planetenrades im Eingriff stehen, ist mit dem Korb des Differenzials verbunden. Die Achswellenräder des Differenzials sind jeweils mit einer Abtriebswelle drehfest verbunden. Eine der Abtriebswellen ist konzentrisch zur Antriebswelle, d.h. zur Rotorwelle und zum Rotor des Elektromotors angeordnet. Dazu steckt die Abtriebswelle in der als Hohlwelle ausgebildeten Rotorwelle und ist in dieser gleitgelagert. Die Getriebeanordnung ist von dem Elektromotor durch einen Gehäusedeckel getrennt. Der Gehäusedeckel weist die Drehdurchführung für die Rotorwelle und damit auch für die darin steckende Abtriebswelle auf.

Das Innere des Elektromotors ist an der Drehdurchführung gegenüber der Getriebeanordnung mittels einer Radialwellendichtung abgedichtet. Radialwellendichtringe weisen wenigstens eine Dichtlippe auf, die berührend im Kontakt mit einer Dichtfläche steht und demnach bei Rotation schleifend dichtet. Beide Wälzlager zur Lagerung der Rotorwelle sitzen im Inneren des Elektromotors, das nicht Schmieröl ausgesetzt ist. Dieser "trockene" Bereich ist von einem "nassen" getriebeseitigen Bereich der Antriebseinheit mittels einer Radialwellendichtung getrennt. Der "nasse" Bereich weist Schmieröl auf, das als Spritzöl oder Ölnebel verteilt ist. Da die Wälzlager im trockenen Bereich angeordnet sind, sind diese mit Fett geschmiert und abgedichtet. Die Wälzlager sind Kugellager.

Die Lebensdauer eines Wälzlagers ist abhängig von der Gebrauchsdauer des Schmierfetts, mit dem dieses Wälzlager geschmiert ist. Die Gebrauchsdauer des Fetts ist von verschiedenen Faktoren wie von der Art des Schmierfetts von der Drehzahl und der Temperatur abhängig. Hohe Temperaturen im Elektromotor können sich nachteilig auf die Gebrauchsdauer des Fetts und damit auf die Lebensdauer des Lagers auswirken.

DE 198 41 159 A1 zeigt mit Figur 2 eine weitere Antriebseinheit der gattungsbildenden Art, in der die Rotorwelle abweichend zur oben beschriebenen Anordnung mittels Kugellagern am Gehäuse der Antriebeinheit und somit nicht im Inneren des Elektromotors gelagert ist. Eines der Kugellager sitzt getriebeseitig in einem Gehäusedeckel, der den Elektromotor von der Getriebeanordnung trennt. Das andere der Kugellager sitzt abtriebsseitig in dem Elektromotor an einem Gehäuseabschnitt. Der Gehäusedeckel weist die Drehdurchführung für die Rotorwelle auf. Das "trockene" Innere des Elektromotors ist an der Drehdurchführung gegenüber dem "nassen" Bereich der Getriebeanordnung mittels einer Radialwellendichtung abgedichtet. Das getriebeseitige Kugellager sitzt im "nassen" Bereich und ist mit Schmieröl geschmiert. Das Schmieröl wird über einen Ringspalt zwischen der Rotorwelle und dem Gehäusedeckel zum Kugellager geleitet. Der Radialwellendichtung folgt in der Drehdurchführung elektromotorseitig hinter dem Kugellager. Die Lebensdauer dieses Kugellagers ist stark von der Menge Schmieröl abhängig, die das Innere des Kugellager ständig erreicht.

Auch die Anordnung nach DE 198 41 159 A1 in Figur 2 zeigt eine Rotorwelle, die eine Hohlwelle ist und in der eine Abtriebswelle steckt. Ein Ringspalt zwischen der Abtriebswelle und der Rotorwelle ist getriebeseitig zum Ringspalt hin mittels eines Radialwellendichtrings abgedichtet, der verhindert, dass Öl über den Ringspalt aus dem Getriebe entweicht.

Die JP 2004 215393 beschreibt eine Rotordichtung mit Hilfe derer eine zweite Ölkühlkammer gegen eine Stator-Luftkammer abgedichtet wird. Beschrieben werden dabei verschiedene Ölpassagen und Kanäle.

### Aufgabe der Erfindung

Die Aufgabe der Erfindung ist es, eine Antriebsanordnung zu schaffen, in der die ausreichende Versorgung von Wälzlagern und deren Lebensdauer ausreichend abgesichert ist. Weiter soll eine Antriebsanordnung mit einer kostengünstigen Dichtungsanordnung und Schmierung geschaffen werden.

### Beschreibung der Erfindung

Die Erfindung ist auf alle Antriebseinheiten für Kraftfahrzeuge mit wenigstens einem Elektromotor und mit wenigstens einer Getriebeanordnung anwendbar, in denen der Elektromotor und die Getriebeanordnung mittels einer Rotorwelle des Elektromotors miteinander wirkverbunden sind. Die Rotorwelle, die den Rotor des Elektromotors aufnimmt ist mittels wenigstens eines Wälzlagers um die Rotationsachse der Rotorwelle rotierend gelagert.

Wälzlager sind alle Lager wie Kugel-, Nadel- oder Rollenlager beliebiger Ausführungen, wie Schräg- oder Radiallager. Die Wälzlager weisen innere Laufbahnen und äußere Laufbahnen und radial bzw. axial zwischen den Laufbahnen angeordnete Wälzkörper auf. Die Laufbahnen sind an Lagerringen oder direkt an der Welle und/oder dem Gehäuse ausgebildet.

Die Welle ist beispielsweise eine An- oder Abtriebswelle der Getriebeanordnung zum Übertragen von Drehmomenten. Vorzugsweise ist die Welle die Rotorwelle des Elektromotors. Es ist denkbar, dass mit dem ersten Wälzlager in der Drehdurchführung auch ein Wellenstummel drehbar gelagert ist. Der Wellenstummel ist zum Beispiel der Schaft eines Sonnenrades, alternativ eines Planetenträgers.

Das Wälzlager sitzt in einer Drehdurchführung in einem Wandabschnitt des Elektromotors, des Getriebes oder eines Deckels, die das Innere des Elektromotors gegenüber dem Inneren der Getriebeanordnung oder das Innere der Getriebeanordnung gegenüber dem Inneren des Elektromotors verschließt. Die Drehdurchführung ist beispielsweise ein zylindrisches Loch in dem Wandabschnitt oder in einem Lagerdeckel, einer Lagerbrille oder ähnlichen Elementen.

Das Wälzlager ist mit Dichtungen versehen. Die Dichtungen sitzen beidseitig der Wälzkörper und überbrücken ganz oder teilweise den Abstand zwischen den Laufbahnen oder Lagerringen. Das Wälzlager ist zum Elektromotor hin mit einer ersten Dichtung abgedichtet, die an wenigstens einer Stelle, vorzugsweise mit einer oder mehreren Dichtlippen, im schleifend anliegenden Dichtkontakt mit einer Dichtfläche steht. Das Wälzlager getriebeseitig über wenigstens einen radialen ersten Ringspalt zur Getriebeanordnung hin offen.

Der Dichtspalt ist vorzugsweise als Dichtspalt zwischen einer berührungslosen Dichtung und einer Dichtfläche ausgebildet.

Mit einer derartigen Ausführung der Lageranordnung ist das Wälzlager gegenüber dem vorzugsweise "trockenen" Bereich der Antriebsanordnung abgedichtet. Gegenüber dem "nassen" Bereich ist das Wälzlager durch den Ringspalt soweit offen, wie es die Abmessungen des Dichtspaltes es zulassen.

Die Erfindung sieht vor, dass die Welle mittels eines zweiten Wälzlagers gelagert ist, welches mit Abstand zum ersten Wälzlager angeordnet ist und welches zur einen Seite zum Elektromotor hin mit einer zweiten Dichtung abgedichtet ist, die an wenigstens einer Stelle im schleifend anliegenden Dichtkontakt mit einer Dichtfläche steht. Auch das zweite Wälzlager ist wie das erste Wälzlager an der vom Elektromotor weg gerichteten Seite über wenigstens einen radialen zweiten Ringspalt offen.

Eine Ausgestaltung der Erfindung sieht vor, dass das Wälzlager zumindest teilweise mit Schmierfett befüllt ist. Erfindungsgemäss ist vorgesehen, dass der radiale Ringspalt durchlässig für Schmieröl ist. Weiter ist alternativ vorgesehen, dass das Wälzlager zumindest teilweise mit Schmierfett befüllt ist und dass der radiale Ringspalt durchlässig für Schmieröl ist. Die Dichtungen der erfindungsgemäßen Dichtungsanordnung halten die festen Bestandteile des Schmierfetts im Lagerinneren zurück. Der Dichtspalt der Spaltdichtung ist dementsprechend so ausgelegt, dass Schmieröl zum Schmierfett gelangt, das Schmierfett jedoch nicht aus dem Lager gewaschen wird.

Der Vorteil einer erfindungsgemäßen Antriebseinheit liegt darin, dass das trockene und saubere Innere des Elektromotors abgedichtet und somit trocken und sauber gehalten ist. Da auch die schleifende Dichtung ins Wälzlager integriert ist, entfallen gesonderte Dichtsitze in der Drehdurchführung und Dichtflächen an der Welle. Die Anordnung kann dadurch raumsparender ausgeführt werden. Die Kosten für die Herstellung der Dichtsitze und Dichtflächen reduzieren sich. Zeit und Kosten für die Montage eines Dichtringes in die Antriebseinheit entfallen. Das das Innere des Wälzlagers getriebeseitig geöffnet ist, ist der Reibungswiderstand geringer, als wie beim Einsatz eines beidseitig schleifend abgedichteten Wälzlager des gattungsbildenden Stand der Technik. Außerdem ist das Innere des erfindungsgemäßen Wälzlagers über die Spaltdichtung für Schmieröl zugänglich und kann durch dieses gekühlt und gut geschmiert werden.

In den mit Schmierfett gefüllten Wälzlagern des Standes der Technik trennt sich das Schmieröl des Fetts häufig von den festen Bestandteilen (z.B. Seifen). Das führt dazu, dass das Schmierfett letztendlich austrocknet und seine Schmierwirkung verliert. Gemäß einer Ausgestaltung der Erfindung ist das Wälzlager mit Schmierfett befüllt und weist zur "nassen" Seite hin einen Ringspalt auf, der durchlässig für Schmieröl aus der Getriebeanordnung oder für Schmieröl aus einem oder mehreren Schmierkanälen zugängig ist. Mit einer derartigen Auslegung des Schmierspalts wird das Schmierfett ständig mit Schmieröl versorgt und kann nicht austrocknen.

Die Anordnung ist insbesondere in Antriebseinheiten aus einem Elektromotor und einem Differenzial oder für andere Hybridantriebsanordnungen geeignet. Der Elektromotor ist entweder der Hauptantrieb oder ein Hilfsantrieb bzw. ein Antrieb für eine Steuereinheit. Vorzugsweise sind die Rotorwelle des Elektromotors und ein rotationssymmetrisches Getriebeelement des Differenzials konzentrisch zu einer gemeinsamen Rotationsachse angeordnet. Das Getriebeelement ist beispielsweise das Sonnenrad oder der Steg des Differenzials. Getriebeelement und Rotorwelle sind drehfest miteinander verbunden, wobei wahlweise die Rotorwelle oder das Getriebeelement mit dem ersten Wälzlager gelagert sind.

### Kurze Beschreibung der Zeichnungen

Die Erfindung wird nachfolgend anhand von Ausführungsbeispielen näher erläutert. Es zeigen:
- Figur 1: - einen Teilschnitt längs entlang einer Rotationsachse eines vereinfacht dargestellten Antriebseinheit mit einer Getriebeanordnung in Form eines Planetengetriebe eines Differenzials und mit einem Elektromotor,
- Figur: 2 - das Detail Z aus Figur 1, mit dem das getriebeseitige Wälzlager zur Lagerung der Rotorwelle des Elektromotors vergrößert und nicht maßstäblich dargestellt ist,
- Figur 3: - das Detail X aus Figur 1, mit dem das abtriebsseitige Wälzlager zur Lagerung der Rotorwelle des Elektromotors vergrößert und nicht maßstäblich dargestellt ist und
- Figur 4,: das als Sonnenrad ausgelegte Zahnrad des Planetentriebs in einem Längsschnitt entlang der Rotationsachse, vergrößert und nicht maßstäblich dargestellt.

### Ausführliche Beschreibung der Zeichnungen

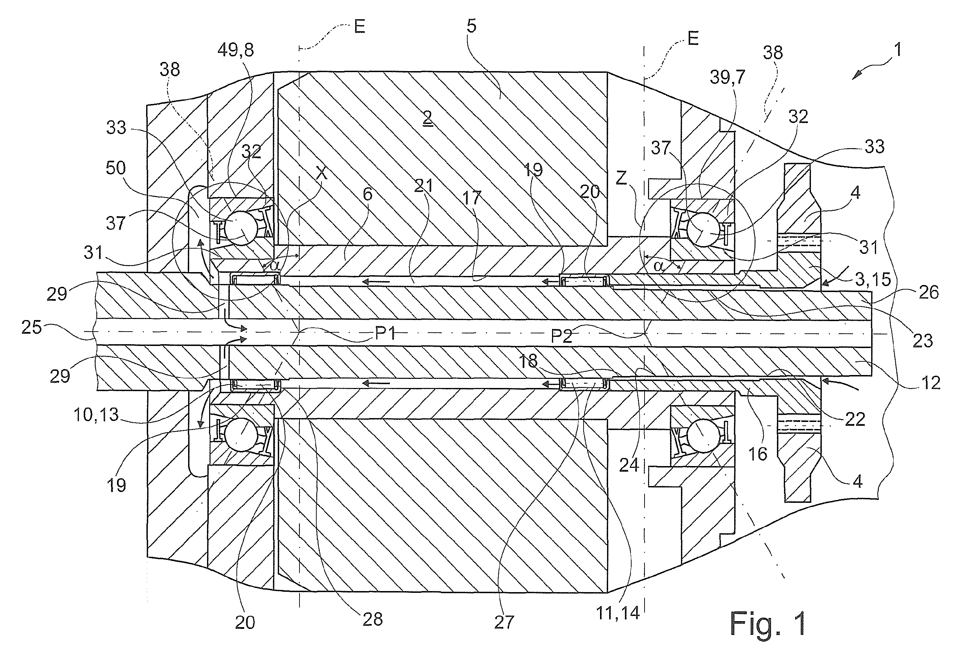

Figur 1 - Figur 1 zeigt einen Teilschnitt eines vereinfacht dargestellten Antriebseinheit 1 mit einer Getriebeanordnung in Form eines Planetengetriebes eines Differenzials und mit einem Elektromotor 2. Das Planetengetriebe ist zeichnerisch teilweise mit einem Sonnenrad 3 und mit Planetenrädern 4 abgebildet. Der Elektromotor 2 und die Getriebeanordnung sind miteinander mittels einer Rotorwelle 6 des Elektromotors 2 wirkverbunden. Die Rotorwelle 6 nimmt den Rotor 5 des Elektromotors auf und ist zweifach mittels Wälzlagern 39 und 49 in der Ausführung von Schrägkugellagern 7 und 8 in dem Gehäuse 9 der Antriebseinheit 1 drehbar gelagert.

Figuren 1, 2 und 3 - Die Schrägkugellager 7 und 8 weisen je einen Innenring 31, einen Außenring 32 und Kugeln 33 auf. Es ist aber auch denkbar, dass die Laufbahnen 34 und 36 der Schrägkugellager 7 und 8 direkt an der Rotorwelle 6 oder dem Gehäuse ausgebildet sind. Die Schrägkugellager 7 und 8 und sind in X-Anordnung angestellt, dass heißt, die durch die Zentren verlaufenden Drucklinien beider Schrägkugellager schneiden in P1 und P2 die Rotationsachse 25 zwischen den Lagerstellen.

Die Schrägkugellager 7und 8 sind jeweils mit einem Druckwinkel α im Bereich von 15° - 25°, vorzugsweise mit 20°, ausgeführt. Der Druckwinkel α ist der spitze Winkel, den die jeweilige Radialebene E und die jeweilige durch den Kugelmittelpunkt 37 verlaufende Kontaktlinie 38 in der Schnittebene des dargestellten Längsschnitts zwischen sich einschließen.

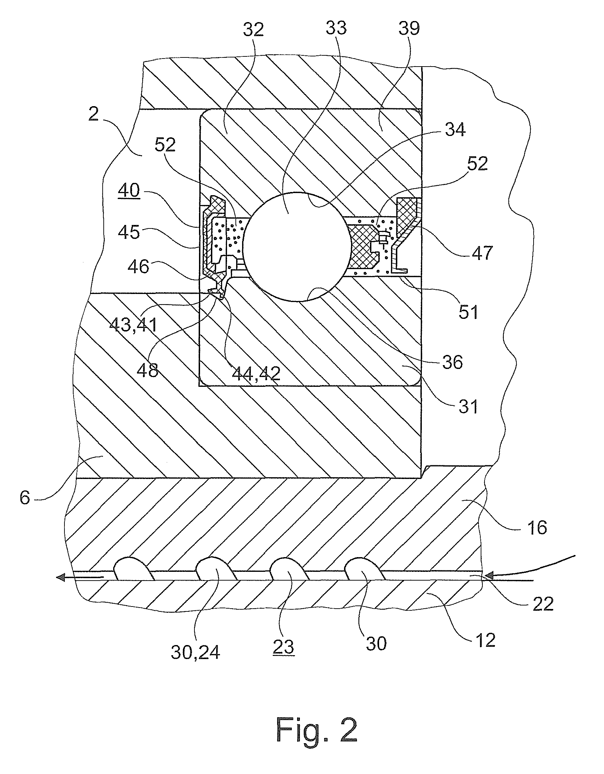

Figur 2, (Figur 1) - Das Wälzlager 39 ist mit einer Dichtung 40 abgedichtet, die sich den Kugeln 33 zum Elektromotor 2 hin anschließt. Die Dichtung 40 ist aus einer Armierung 45 sowie aus einer elastischen Dichtung 46 gebildet, sitzt in dem Außenring 32 und liegt, wie aus Figur 2, einer vergrößerten Darstellung des Details Z hervorgeht, an zwei Dichtkontakten 41 und 42 einer Dichtungsnut 48 des Innenrings 31 mit Dichtlippen schleifend an Dichtflächen 43 und 44 an.

Den Kugeln 33 schließt sich zu der Getriebeanordnung hin ein Dichtblech 47 an, das an dem Außenring 32 befestigt ist. Das Wälzlager 39 ist getriebeseitig über wenigstens einen radialen ersten Ringspalt 51 zur Getriebeanordnung hin offen, der zwischen dem Dichtblech 47 und dem Innenring 31 ausgebildet ist und der demnach eine Spaltdichtung begründet.

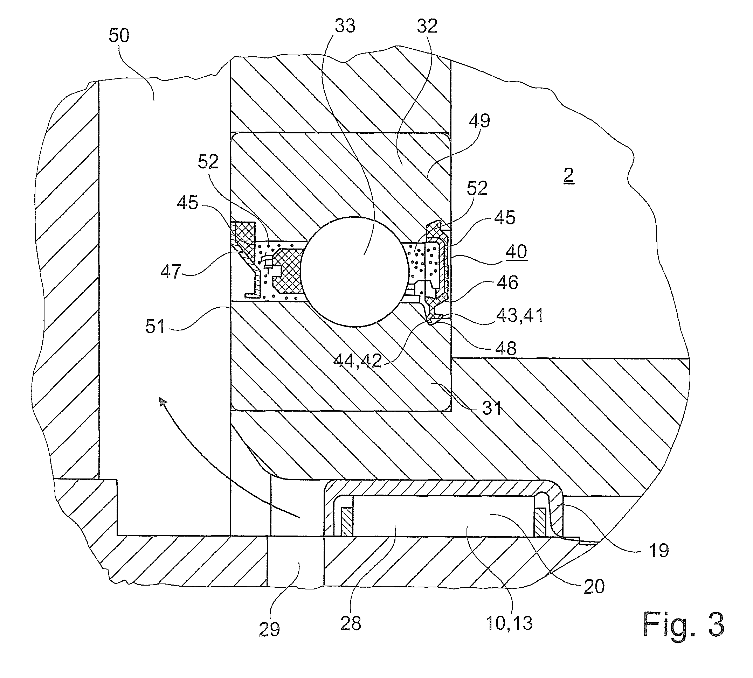

Figur 3, (Figur 1) - Das Wälzlager 49 ist in Figur 3 mit einer vergrößerten Darstellung des Details X dargestellt und zur einen Seite zum Elektromotor 2 hin ebenfalls mit einer Dichtung 40 abgedichtet, die sich den Kugeln 33 zum Elektromotor 2 hin anschließt. Die Dichtung 40 ist aus einer Armierung 45 sowie aus einer elastischen Dichtung 46 gebildet, sitzt in dem Außenring 32 und liegt an zwei Dichtkontakten 41 und 42 einer Dichtungsnut 48 des Innenrings 31 schleifend an Dichtflächen 43 und 44 an. Das zweite Wälzlager 49 ist zur anderen Seite zu einem Ringkanal 50 hin über wenigstens einen radialen Ringspalt 51 für Schmieröl zugänglich, der zwischen dem Dichtblech 47 und dem Innenring 31 ausgebildet ist und demnach eine Spaltdichtung bildet.

Figuren 2 und 3 - Die Ringspalte 51 beider Wälzlager 39 und 49 sind durchlässig für Schmieröl. Außerdem sind beide Wälzlager 39 und 49 mit Schmierfett 52 befüllt.

Figur 1 -An der Rotorwelle 6 ist ein Zahnrad 15 der Getriebeanordnung 1 konzentrisch zur Rotationsachse 25 der Rotorwelle 6 fest. Das Zahnrad 15 ist mittels eines hohlzylindrischen Schafts 16 in der als Hohlwelle ausgeführten Rotorwelle 6 abgestützt und ist das Sonnenrad 3, das im Zahneingriff mit den nur teilweise dargestellten Planetenrädern 4 des ansonsten nicht dargestellten Planetentriebes der Getriebeanordnung steht.

Die Rotorwelle 6 ist innen hohl und weist ein Durchgangsloch 17 auf. In dem Durchgangsloch 17 ist das Sonnenrad 3 drehfest befestigt. Der Schaft 16 und das Zahnrad 15 sind innen hohl.

Eine weitere Welle 12 steckt in dem Durchgangsloch 17 der Rotorwelle 6 und einem Durchgangsloch 18 des Sonnenrades 3 und ist an zwei Lagerstellen 10 und 11 in der Rotorwelle 6 drehbar gelagert,. Die Lagerstellen 10 und 11 weisen jeweils ein als Nadellager 13 und 14 ausgebildetes Wälzlager auf. Die Nadellager 13 und 14 sind jeweils aus einer Hülse 19 und aus Nadeln 20 gebildet.

Zwischen der Rotorwelle 6 und der weiteren Welle 12 ist ein Ringspalt 21 ausgebildet. Ein weiterer Ringspalt 22 ist zwischen dem Sonnenrad 3 und der weiteren Welle 12 ausgebildet. Der Querschnitt des Ringspalts 22 ist kleiner als der Querschnitt des Ringspalts 21. Der rotationssymmetrische Schaft 16 des Sonnenrades 3 bildet zusammen mit der Oberfläche der Welle 12 eine Fördereinrichtung 23, die zwecks Förderung von Schmieröl innen in dem Durchgangsloch 18 mit einer schraubenförmigen Profilierung 24 versehen ist, die der Welle 12 zugewandt ist und um diese umläuft. Die Strömungsrichtung des Schmieröls durch die als Ringspalte 21 und 22 ausgeführten Schmierkanäle ist mittels der Richtungspfeile angegeben.

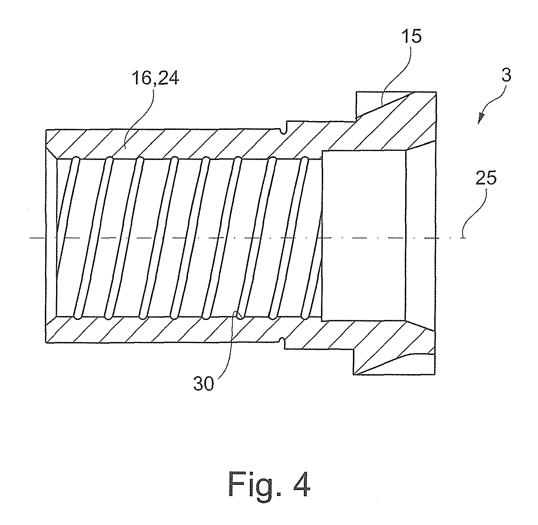

Figur 2 und Figur 4 - Figur 4 zeigt einen Schnitt durch das Sonnenrad 3 längs entlang der Rotationsachse. Eine schraubenförmige Profilierung 24 an der Innenseite des Schafts 16 ist eine spiralförmig verlaufende Nut 30, die bei Drehung der zweiten Welle 12 bei Vorwärtsfahrt in eine Drehrichtung mit beispielsweise hohen Drehzahlen, auch durch Relativdrehzahlen der beiden Wellen 6 und 12 zueinander, axial in Richtung der Schmierstellen 27 sowie 28 fördert.

Figuren 1, 2 und 3 - Die Fördereinrichtung 23 ist somit mit der schraubenförmigen Profilierung 24 in dem Ringspalt 22 um die gemeinsame Rotationsachse 25 der Wellen 6 und 12 rotierbar angeordnet und wird bei Betrieb des Elektromotors 2 mittels der Rotorwelle 6 angetrieben. Alternativ ist die Fördereinrichtung 23, die einteilig mit dem Zahnrad 15 ausgebildet ist und seitlich von diesem abgeht, durch das Planetengetriebe und damit durch das Zahnrad 15 angetrieben. Schmieröl gelangt über das Wellenende 26 in den Ringspalt 22, wird von dort durch die Förderwirkung der schraubenförmigen Profilierung 24 in den Ringspalt 21 axial zu den Schmierstellen 27 sowie 28 und durch diese hindurch zu dem Ringkanal 50 vor dem Wälzlager 49 gefördert. Das Schmieröl wird über die Querbohrungen 29 in den Schmierkanal 35 und von dort in das Planetengetriebe zurück gefördert.

**Bezugszeichen**

| | | | |
|---|---|---|---|
| 1 | Antriebseinheit | 30 | Nut |
| 2 | Elektromotor | 31 | Innenring |
| 3 | Sonnenrad | 32 | Außenring |
| 4 | Planetenrad | 33 | Kugeln |
| 5 | Rotor | 34 | Laufbahn |
| 6 | Rotorwelle | 35 | Schmierkanal |
| 7 | Schrägkugellager | 36 | Laufbahn |
| 8 | Schrägkugellager | 37 | Kugelmittelpunkt |
| 9 | Gehäuse | 38 | Kontaktlinie |
| 10 | Lagerstelle | 39 | Wälzlager |
| 11 | Lagerstelle | 40 | Dichtung |
| 12 | Welle | 41 | Dichtkontakt |
| 13 | Nadellager | 42 | Dichtkontakt |
| 14 | Nadellager | 43 | Dichtfläche |
| 15 | Zahnrad | 44 | Dichtfläche |
| 16 | Schaft | 45 | Armierung |
| 17 | Durchgangsloch | 46 | elastische Dichtung |
| 18 | Durchgangsloch | 47 | Dichtblech |
| 19 | Hülse | 48 | Dichtungsnut |
| 20 | Nadeln | 49 | Wälzlager |
| 21 | Ringspalt | 50 | Ringkanal |
| 22 | Ringspalt | 51 | Ringspalt |
| 23 | Fördereinrichtung | | |
| 24 | Profilierung | | |
| 25 | Rotationsachse | | |
| 26 | Wellenende | | |
| 27 | Schmierstelle | | |
| 28 | Schmierstelle | | |
| 29 | Querbohrung | | |

## Patentansprüche

1. Antriebseinheit (1) für Kraftfahrzeuge mit
wenigstens einem Elektromotor (2) und mit
wenigstens einer Getriebeanordnung,
wobei der Elektromotor (2) und die Getriebeanordnung mittels einer als Hohlwelle ausgebildeten Rotorwelle (6) miteinander wirkverbunden sind und
wobei in der Rotorwelle (6) eine weitere Welle (12) der Antriebseinheit steckt und dabei die Rotorwelle (6) mittels wenigstens eines ersten Wälzlagers (39), das in einer Drehdurchführung für die Rotorwelle (6) in der Getriebeanordnung sitzt, drehbar gelagert ist, und
wobei die Antriebseinheit (1) ein zweites Wälzlager (49) zum Lagern einer der Wellen (6, 12) aufweist, welches mit Abstand zum ersten Wälzlager (39) angeordnet ist,
wobei die Wälzlager (39, 49) zum Elektromotor (2) hin jeweils mit einer Dichtung (40) abgedichtet sind, die an wenigstens einer Stelle im schleifend anliegenden Dichtkontakt mit einer Dichtfläche steht und
dabei jedes der Wälzlager (39, 40) über wenigstens einen radialen und für Schmieröl durchlässigen Ringspalt (51) zur anderen Seite hin offen ist,
wobei Wälzkörper jedes der Wälzlager axial zwischen der jeweiligen Dichtung (40) und dem radialen Ringspalt (51) angeordnet sind, und
wobei der Ringspalt (51) und die Getriebeanordnung über wenigstens einen Schmierkanal miteinander verbunden sind,
wobei der Schmierkanal zumindest teilweise ein zwischen der Hohlwelle und der weiteren Welle (12) ausgebildeter radialer weiterer Ringspalt (22) ist, in dem wenigstens eine Fördereinrichtung für Schmieröl zwischen der Hohlwelle und der weiteren Welle (12) ausgebildet ist.

2. Antriebseinheit nach Anspruch 1, **dadurch gekennzeichnet, dass** der radiale erste Ringspalt (51) an einer Spaltdichtung aus wenigstens einem Dichtblech (47) und einem Lagerring (31) ausgebildet ist.

3. Antriebseinheit nach Anspruch 1, **dadurch gekennzeichnet, dass** das Wälzlager (39, 49) zumindest teilweise mit Schmierfett befüllt ist.

4. Antriebseinheit nach Anspruch 1, **dadurch gekennzeichnet, dass** die Fördereinrichtung durch eine schraubenförmige Profilierung (24) gebildet ist.

5. Antriebseinheit nach Anspruch 4, **dadurch gekennzeichnet, dass** die weitere Welle (12) mit einem Sonnenrad eines Planetentriebs der Getriebeanordnung über die schraubenförmige Profilierung (24) wirkverbunden ist.

## Claims

1. Drive unit (1) for motor vehicles, comprising at least one electric motor (2) and comprising at least one transmission assembly,
wherein the electric motor (2) and the transmission assembly are operatively connected to one another by means of a rotor shaft (6) which is in the form of a hollow shaft, and
wherein a further shaft (12) of the drive unit is fitted in the rotor shaft (6) and in the process the rotor shaft (6) is rotatably mounted by means of at least one first rolling bearing (39) which is located in a rotary leadthrough for the rotor shaft (6) in the transmission assembly, and
wherein the drive unit (1) has a second rolling bearing (49) for bearing one of the shafts (6, 12), which second rolling bearing is arranged at a distance from the first rolling bearing (39),
wherein the rolling bearings (39, 49) are each sealed off from the electric motor (2) by a seal (40) which is in slidingly sealing contact with a sealing surface at at least one point, and
in the process each of the rolling bearings (39, 40) is open toward the other side by way of at least one radial annular gap (51) through which lubricating oil can pass,
wherein rolling bodies of each of the rolling bearings are arranged axially between the respective seal (40) and the radial annular gap (51), and
wherein the annular gap (51) and the transmission assembly are connected to one another by way of at least one lubricating channel,
wherein the lubricating channel is at least partially a radial further annular gap (22) which is formed between the hollow shaft and the further shaft (12) and in which at least one delivery device for lubricating oil is formed between the hollow shaft and the further shaft (12).

2. Drive unit according to Claim 1, **characterized in that** the radial first gap (51) is formed at a gap seal comprising at least one sealing plate (47) and one bearing race (31).

3. Drive unit according to Claim 1, **characterized in that** the rolling bearing (39, 49) is at least partially filled with lubricating grease.

4. Drive unit according to Claim 1, **characterized in that** the delivery device is formed by a helical profiling (24).

5. Drive unit according to Claim 4, **characterized in that** the further shaft (12) is operatively connected to a sun wheel of a planetary gear of the transmission assembly by means of the helical profiling (24).

## Revendications

1. Unité d'entraînement (1) pour véhicules automobiles comprenant au moins un moteur électrique (2) et au moins un agencement de transmission,
le moteur électrique (2) et l'agencement de transmission étant en liaison fonctionnelle l'un avec l'autre au moyen d'un arbre de rotor (6) réalisé sous forme d'arbre creux, et
un arbre supplémentaire (12) de l'unité d'entraînement étant enfiché dans l'arbre de rotor (6) et en l'occurrence l'arbre de rotor (6) étant supporté à rotation au moyen d'au moins un premier palier à roulement (39) qui repose dans un passage rotatif pour l'arbre de rotor (6) dans l'agencement de transmission, et
l'unité d'entraînement (1) présentant un deuxième palier à roulement (49) pour le support de l'un des arbres (6, 12), lequel est disposé à distance du premier palier à roulement (39),
les paliers à roulement (39, 49) étant étanchéifiés vers le moteur électrique (2) à chaque fois avec un joint d'étanchéité (40), qui est en contact d'étanchéité s'appliquant avec glissement en au moins un endroit avec une surface d'étanchéité et
chacun des paliers à roulement (39, 40) étant en l'occurrence ouvert vers l'autre côté par le biais d'au moins une fente annulaire (51) radiale et perméable à l'huile de lubrification,
des corps de roulement de chacun des paliers à roulement étant disposés axialement entre le joint d'étanchéité respectif (40) et la fente annulaire radiale (51), et
la fente annulaire (51) et l'agencement de transmission étant connectés l'un à l'autre par le biais d'au moins un canal de lubrification,
le canal de lubrification étant au moins en partie une fente annulaire radiale supplémentaire (22) réalisée entre l'arbre creux et l'arbre supplémentaire (12), dans laquelle est réalisé au moins un dispositif de transport pour l'huile de lubrification entre l'arbre creux et l'arbre supplémentaire (12).

2. Unité d'entraînement selon la revendication 1, **caractérisée en ce que** la première fente annulaire radiale (51) est réalisée au niveau d'un joint d'étanchéité à fente constitué d'au moins une tôle d'étanchéité (47) et d'une bague de palier (31).

3. Unité d'entraînement selon la revendication 1, **caractérisée en ce que** le palier à roulement (39, 49) est rempli au moins en partie de graisse de lubrification.

4. Unité d'entraînement selon la revendication 1, **caractérisée en ce que** le dispositif de transport est formé par un profilage hélicoïdal (24).

5. Unité d'entraînement selon la revendication 4, **caractérisée en ce que** l'arbre supplémentaire (12) est en liaison fonctionnelle avec une roue solaire d'un engrenage planétaire de l'agencement de transmission par le biais du profilage hélicoïdal (24).
